# EUROPEAN PATENT APPLICATION

(11) **EP 1 536 615 A1**
(43) Date of publication of application: **01.06.2005**
(21) Application number: 03078761.8
(22) Date of filing: 26.11.2003
(51) Int. Cl.: H04M 1/05, H04M 1/60

(54) **Wireless headset for a portable electronic device**

(71) Applicant: Edison Technologies Gbr, 50769 Köln (DE)
(72) Inventor: Hiscock, Andrew James, 6641 EM Beuningen (NL); Shefi, Amit, Yavne PO 81511 (IL); Kasapoglu, Edison, 50769 Köln (DE)
(74) Representative: Land, Addick Adrianus Gosling

(57) **Abstract**

The present invention relates to a portable electronic device, comprising:
- a first transceiver for wirelessly transmitting and receiving electromagnetic signals;
- a headset element comprising a second transceiver for wirelessly transmitting and receiving electromagnetic signals from the first transceiver, a microphone, a battery and a loudspeaker;
- docking means for docking the headset onto the electronic device, said docking means providing power supply to said battery when the headset element is docked.

## Description

The present invention relates to a portable electronic device, comprising a first transceiver for wirelessly exchanging electromagnetic signals, and a headset element comprising a second transceiver for wirelessly exchanging electromagnetic signals with the first transceiver, a microphone, a battery and a loudspeaker. Such known devices generally use Bluetooth for the wireless transmission of the electromagnetic signals.

Drawbacks of this known device are numerous. The headset is separate from the electronic device. In all known devices there is no way to carry the headset in a convenient manner together with the device. Thus people tend to lose, or not use, their wireless headset because it is not convenient to use. Some known devices require the addition of an external base station to the electronic device, preventing the device from being charged while the headset is in use. This prevents the device from being secured to a charging base, for instance in a car. Furthermore, the known devices need separate charging equipment and require a different charging cycle than the electronic device. A user may require to carry two or three chargers, i.e. for the electronic device, the headset and the base station. While the electronic device may have a visible power meter, the available wireless headsets do not and it is common that they will suddenly cease to function during use when the battery is empty.

It is an object of the present invention to provide an improved electronic device. The present invention therefore provides a portable electronic device, comprising a first transceiver for wirelessly exchanging electromagnetic signals; a headset element comprising a second transceiver for wirelessly exchanging electromagnetic signals with the first transceiver, a microphone, a battery and a loudspeaker; and docking means for docking the headset onto the electronic device, said docking means providing power supply to said battery when the headset element is docked.

The electronic device according to the invention allows the headset element to be conveniently located on the device when not in use, and to be therefore always at hand.

In a preferred embodiment the electronic device is a mobile telephone and/or a handheld computer. These electronic devices are frequently used during travel, for instance in a car. A mobile phone comprising a headset according to the present invention can still be placed in the car base station for charging thereof, while the mobile phone may be used either via the car system or via the headset.

In a further preferred embodiment the docking means are releasably mounted on the electronic device. The docking means may thus be sold separately from the electronic device, so that the docking means can be mounted onto for instance a regular mobile telephone.

In a further preferred embodiment the docking means comprise an electrical contact for electrical coupling to and charging of the battery of the headset element when the headset element is docked. Due to the electrical contact, the battery of the headset can be charged when the headset is docked. This obviates the need for chargers other than the charger of the electrical device itself. In addition, the headset battery remains charged and is always usable. Because the headset battery can be recharged between uses thereof, the need for longer battery life is obviated. The capacity of the headset battery does not significantly influence the performance of the electronic device. Reducing the battery capacity, and therefore its size, allows the headset to be smaller and lighter, and thus more comfortable to wear over longer periods. This also permits improved ergonomic designs to be made.

In a further preferred embodiment, the docking means are electrically coupled to the electrical power supply of the electronic device. This makes it possible to charge the headset battery when it is docked.

In yet a further preferred embodiment, the electronic device is a mobile telephone, and the docking means are electrically coupled to the battery of the telephone via an external interface of the telephone. This makes it possible to provide a viable option for connecting the docking means to the power supply of the mobile telephone.

In yet another preferred embodiment, the electronic device is a mobile telephone, and the docking means are electrically coupled to the battery of the telephone via the power contacts of the SIM-card. This makes it possible to provide another viable coupling for connecting the docking means to the power supply of a random mobile telephone.

In a further preferred embodiment, the docking means comprise a switch element for switching on or off the wireless transmission of signals to the headset element in response to undocking or docking of the headset element. The device can be used more conveniently in for instance a car, as a user only has to pick up the headset element, without there being any further need to look at the device and push buttons thereon. This hook switch function also greatly improves safety, as it obviates the necessity for a user to take his or her eyes off the road. The action performs the function of the hook switch of a conventional telephone in initiating and terminating the call so no contact has to be made with other controls or switches.

According to a further aspect, the present invention provides an assembly of a headset element and docking means to be mounted onto a portable electronic device, comprising:
- a headset element comprising a second transceiver for wirelessly receiving electromagnetic signals, a microphone, a battery and a loudspeaker;
- docking means for docking the headset onto the electronic device, said docking means providing power supply to said battery when the headset element is docked, said docking means comprising a first transceiver for wirelessly transmitting electromagnetic signals to the second transceiver.

The assembly provides all the advantages of the above described device, and is suitable for mounting on a random electronic device.

According to yet another aspect, the present invention provides a method of wireless communication between an electronic device and a headset using a device or an assembly as described above.

Further advantages and features of the electronic device of the present invention will be elucidated with reference to the annexed figures, in which:
fig. 1 shows a perspective view of the front of a device according to the invention in a first preferred embodiment;
fig. 2 shows a perspective view of the rear of the device of fig. 1 in a first preferred embodiment;
fig. 3 shows a perspective view of the rear of the device of fig. 1 in a second preferred embodiment;
fig. 4 shows a perspective view of the front of a headset element according to the present invention in a preferred embodiment; and
fig. 5 shows a perspective view of the rear of the headset element of fig. 4.

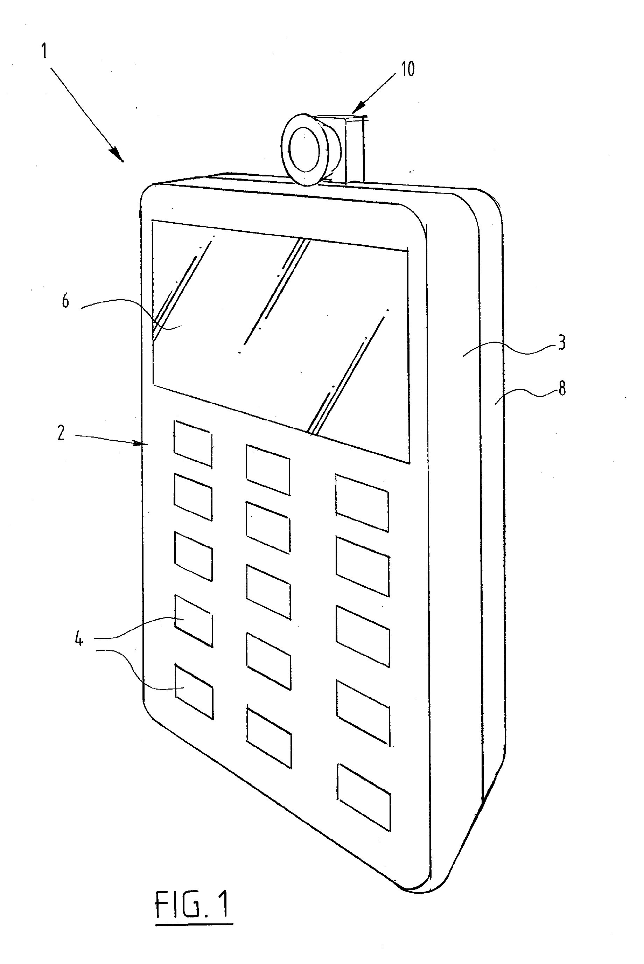

A portable electronic device 1 comprises for instance a mobile telephone 2 comprising a housing 3 (fig. 1). On a front side the housing comprises keys 4 for controlling electronics within the housing, and a screen 6 for displaying information. The electronic device further comprises docking means 8 which are preferably arranged on the rear of housing 3. The device 1 comprises a first transceiver (not shown) for wirelessly transmitting electromagnetic signals, i.e. representing speech signals of the telephone, to a headset element 10. The first transceiver may be arranged within the housing 3, or in docking means 8. The headset element comprises a second transceiver for receiving said signals. When not in use, the headset element may be docked onto the docking means. Thus, the assembly of electronic device comprising docking means and headset may conveniently be carried.

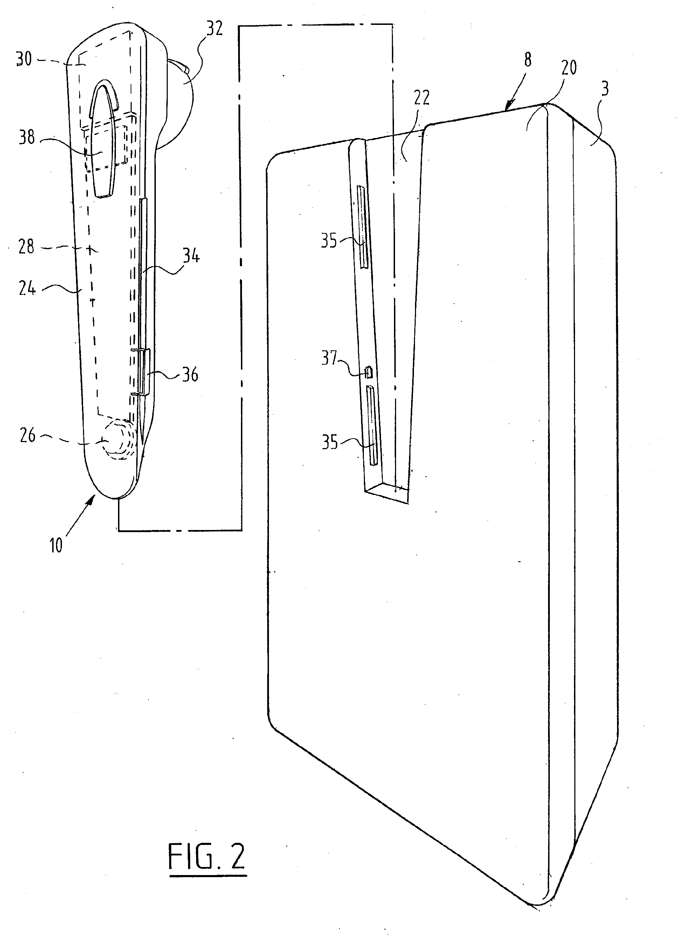

In a first preferred embodiment the docking means 8 comprise a plate-like element 20 which is arranged on the rear of housing 3. A substantially V-shaped recess 22 for docking of headset element 10 therein is arranged at the top of element 20 (fig. 2). The headset element 10 comprises an elongate body 24 with a V-shape substantially complementary to the shape of recess 22. Arranged within body 24, and indicated with discontinuous lines, are a microphone 26, electronic circuit 28 comprising an RF-transceiver for transmitting and receiving electromagnetic (RF) signals, battery 30 and loudspeaker 32. Grooves 34 are arranged on the sides of body 24 for mechanically coupling the headset to protrusions 35 on the sides of recess 22. The electrical contacts 36 are arranged at the end of grooves 34. The contacts 36 couple electrically to contacts 37 on the sides of recess 22 for the purpose of providing power to the headset element. The contacts of the docking means couple to battery-charging circuitry, for instance arranged within element 20. The battery 30 thus recharges when the headset element 10 is docked. At the rear of headset 10 there is arranged a push button 38 for ending a conversation. Element 20 has a thickness in the order of 8 mm, and a height and width corresponding to the height and width of housing 3. It is of course equally possible to arrange the docking means on a side of housing 3 instead of on the rear thereof.

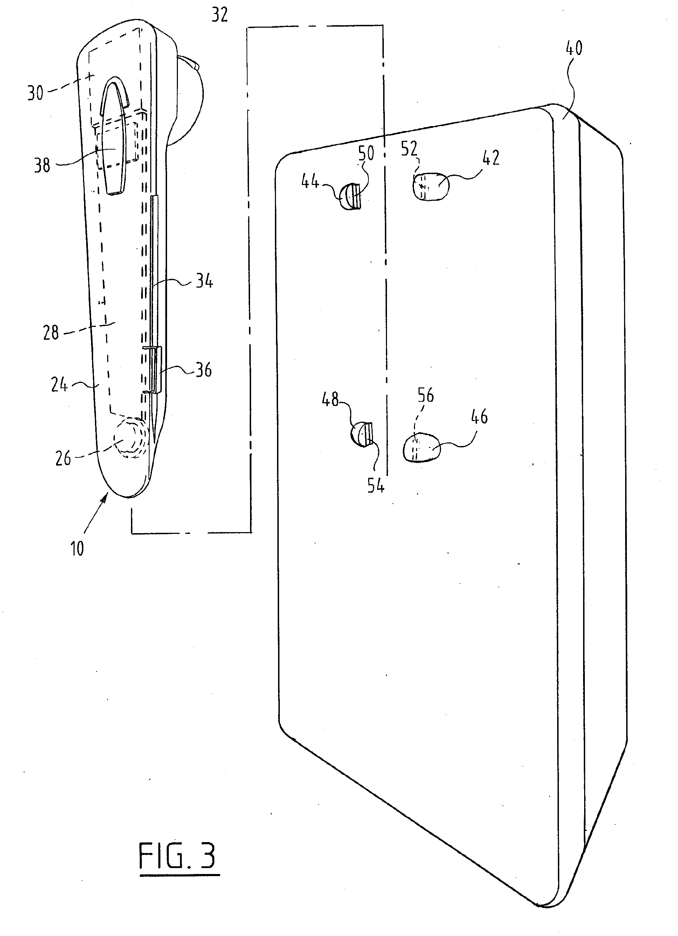

In a second preferred embodiment, the docking means 8 comprise a relatively thin plate element 40 with a thickness in the order of 3 mm (fig. 3). Arranged on element 40 are cams 42, 44, 46, 48 for docking the headset element therebetween. Raised ribs 50, 52 are arranged on the inside of cams 42, 44 for mechanical coupling to grooves 34 of headset 10. On the inside of cams 46, 48 are arranged electrically conducting ribs 54, 56 for electrical coupling to contacts 36. The headset element 10 is the same as shown in fig. 2.

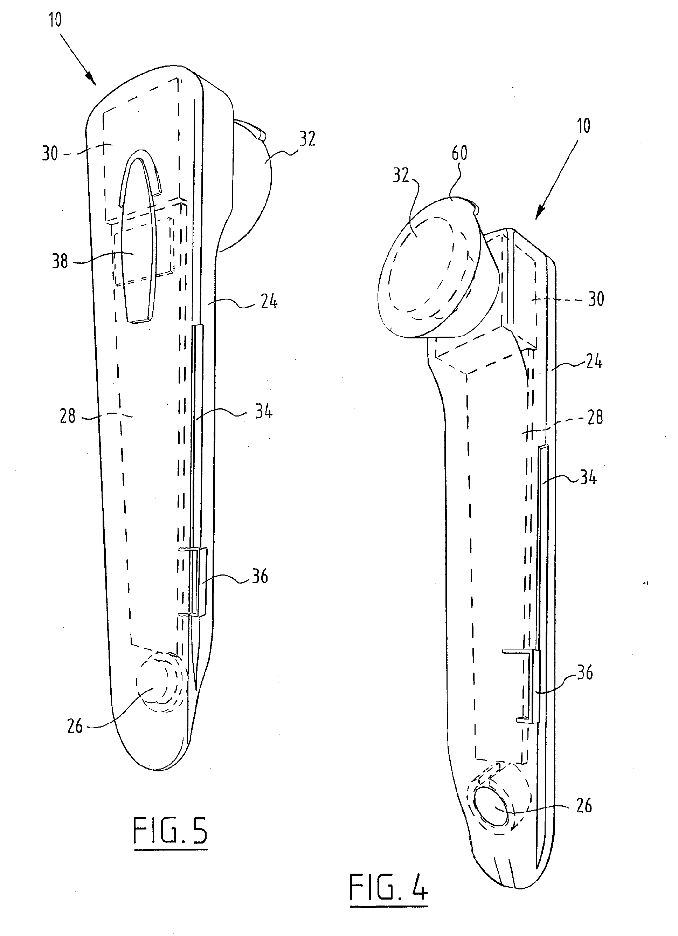

In a practical embodiment, the headset element has a height of about 6 cm and a width from about 1 cm at the microphone 26 to about 1.5 cm at the loudspeaker 32. The shape of body 24 is slightly V-shaped in a front elevation. The rear of body 24, with push button 38, is substantially flat (fig. 5), whereas the front (fig. 4) is slightly curved. The thickness of body 24 is about 2 mm at the microphone, and increases uniformly in the direction of the speaker 32, to about 6 mm. Around loudspeaker 32 there is arranged a conical retaining element 60 of silicone rubber for the purpose of retaining the headset in position in the ear of a user.

The docking means comprise a detection circuit that detects the presence of the headset element. Removal of the headset element from the docking means, i.e. undocking of the headset element, activates the electronic device. This hook switch function allows an incoming call to be answered by undocking the headset, in the same way as a conventional telephone hook switch. If the headset element remains docked, the device may be used in the normal manner without interruption or restriction, by using the regular controls, i.e. keys 4.

Electronic circuit 28 comprises a protection circuit to prevent short-circuiting and/or overheating of battery 30. Furthermore, the docking means may comprise a circuit to ensure that the telephone battery may not be drained externally except by the charging circuit of the headset element so as to prevent accidental discharge.

In a practical embodiment of the present invention, the first and second transceiver are 2.4 GHz transceivers, controlled by an embedded compatible microcontroller. An advantage of the 2.4 GHz radio components over for instance Bluetooth is the lower power consumption. For the purpose of confidentiality, the range of the first and second transceiver is limited to about 3 m. Undocked, the headset element uses about 10 mA 35 mW. The maximum charging current is about 20 mA. Standby current consumption is about 2 µA. Further features reducing power consumption include data compression of the electromagnetic signals to a factor of 10%. Data transmission also occurs in bursts of data, so that the transmission effectively takes up only 20% of the total time of use. Compared to commonly used mobile telephones, the headset element consumes about 5% or less of the telephone battery power and makes little impact on the battery life of the phone in standby. Other known wireless systems using radio frequencies (RF), such as Bluetooth or transceivers working at a higher or lower frequency, for instance 900 MHz, are also applicable in combination with the present invention.

Transceivers suitable for application with the present invention are for instance the nRF2401 2.4 GHz transceiver with embedded 8051 compatible microcontroller of Nordic VLSI ASA. A description of this transceiver can be found at the website www.nvlsi.no, and is incorporated herein by reference. A product specification is enclosed with the confirmation of the present application by mail.

The docking means receive electrical power from the power supply of the device 1, i.e. the battery of the mobile telephone. The connection to the battery is either direct or indirect, via an interface (not shown) which is generally available on the underside of a mobile telephone, or via power-carrying contacts of a SIM card. The SIM card, a chip card present in GSM phones, normally has six contacts, one of which is a power supply connected to the battery of the telephone, and another contact is ground. The docking means may be connected to these power-carrying contacts of the SIM card.

The present invention is likewise suitable for electrical devices with or without an internal transceiver. In the first case, the first transceiver is included within the device. In the second case, the assembly of docking means and headset element is sold separately of the mobile telephone. The first transceiver is included in the docking means, and will be powered by direct or indirect connection to the phone battery as described above.

If the first transceiver is included within the docking means, the audio connection from the first transceiver to the device, i.e. the telephone, is made in one of two ways. In the case the device permits direct physical access to an internal audio connection, then this connection will be used. Generally however, the audio connection will be made via a cable contacting the telephone with a plug via the interface (not shown). This plug may have a male connector for contacting the interface, and a directly corresponding female connector which allows attachment of the telephone to for instance a car charger without interrupting the hands-free function.

In a further preferred embodiment, the assembly of docking station and headset element is included in a hands-free set for use in a vehicle. The docking station is included within the hands-free set, wherein the mobile telephone can be arranged on the hands-free set. A user can choose to either pick up the telephone by pushing a button or by undocking the headset element, and thus use the headset for communication.

In yet a further embodiment the assembly of docking means and headset element is suitable for use with a regular or a DECT (Digital Enhanced Cordless Telecommunications) telephone.

The present invention includes charging circuitry, which may be arranged within element 20, 40 of the docking means or within electronic circuit 28 of the headset element. The charging circuitry comprises circuits that increase the voltage of the telephone battery so that the battery of the headset may be charged even when the telephone battery is not fully charged. The charging circuitry also prevents the headset battery being overcharged, for instance by controlling the charging current. For faster charging, the charging current starts at a relatively high level, and decreases as the headset battery becomes more fully charged. The charging circuitry prevents charging when the telephone battery is discharged below a predetermined level in case of a fault.

The present invention is not limited to the above described preferred embodiments, in which many modifications can be envisaged; the protection sought is defined by the scope of the appended claims.

## Claims

1. A portable electronic device, comprising:
- a first transceiver for wirelessly transmitting and receiving electromagnetic signals;
- a headset element comprising a second transceiver for wirelessly transmitting and receiving electromagnetic signals from the first transceiver, a microphone, a battery and a loudspeaker;
- docking means for docking the headset onto the electronic device, said docking means providing power supply to said battery when the headset element is docked.

2. The portable electronic device according to claim 1, wherein the electronic device is a mobile telephone, a handheld computer and/or a telephone.

3. The portable electronic device according to claim 1 or 2, wherein the docking means are releasably mounted on the electronic device.

4. The portable electronic device according to any of the claims 1-3, wherein the docking means comprise an electrical contact for electrical coupling to and charging of the battery of the headset element when the headset element is docked.

5. The portable electronic device according to any of the claims 1-4, wherein the docking means are electrically coupled to the electrical power supply of the electronic device.

6. The portable electronic device according to claim 5, wherein the electronic device is a mobile telephone, and the docking means are electrically coupled to the battery of the telephone via an external interface of the telephone.

7. The portable electronic device according to claim 5, wherein the electronic device is a mobile telephone, and the docking means are electrically coupled to the battery of the telephone via a power contact of the SIM-card.

8. The portable electronic device according to any of the foregoing claims, wherein the docking means comprise a switch element for switching on or off the wireless transmission of signals to the headset element in response to the undocking or docking of the headset element.

9. The portable electronic device according to any of the foregoing claims, wherein the first and second transceiver use radio frequencies, for instance the 2.4 GHz band, for transmitting and receiving electromagnetic signals, and wherein the docking means comprise a compatible microcontroller for controlling at least the first transceiver.

10. An assembly of a headset element and docking means to be mounted onto a portable electronic device, comprising:
- a headset element comprising a second transceiver for wirelessly transmitting and receiving electromagnetic signals, a microphone, a battery and a loudspeaker;
- docking means for docking the headset onto the electronic device, said docking means providing power supply to said battery when the headset element is docked, said docking means comprising a first transceiver for wirelessly transmitting and receiving electromagnetic signals to the second transceiver.

11. The assembly according to claim 10, wherein the docking means comprise a switch element for switching on or off the wireless transmission of signals to the headset element in response to the undocking or docking of the headset element.

12. Docking means suitable for a device according to any of claims 1-9.

13. Method of wireless communication between an electronic device and a headset using a device or an assembly according to any of the foregoing claims.
